# EUROPEAN PATENT SPECIFICATION

(11) **EP 2 521 881 B1**
(45) Date of publication and mention of the grant of the patent: **28.03.2018**
(21) Application number: 10841591.0
(22) Date of filing: 22.12.2010
(51) Int. Cl.: F23C 5/06, C03B 5/235, C03B 7/06, F23D 14/22, F23D 14/32

(54) **NON-CENTRIC OXY-FUEL BURNER FOR GLASS MELTING SYSTEMS**
NICHTZENTRISCHER SAUERSTOFF-BRENNSTOFF-BRENNER FÜR GLASSCHMELZSYSTEME
BRÛLEUR OXY-FUEL NON CENTRIQUE POUR SYSTÈMES DE FUSION DE VERRE

(30) Priority: 04.01.2010 US 651506
(43) Date of publication of application: 14.11.2012
(73) Proprietor: Linde Aktiengesellschaft, 80331 München (DE)
(72) Inventor: RICHARDSON, Andrew, P., Clinton, NJ 08809 (US); WAINFORD, John, Allen, Shirley, Cryoden, Surrey CR0 8QL (GB); SIMPSON, Neil, Ayton, By Eyemouth TD14 5QX (GB)
(74) Representative: Gellner, Bernd
(86) International application number: PCT/US2010/061785
(87) International publication number: WO 2011/082062

(56) References cited:
- WO-A1-2009/057839
- WO-A1-2009/057839
- US-A- 4 032 287
- US-A1- 2007 281 264
- US-A1- 2007 281 264
- US-B1- 6 206 686
- DATABASE WPI Week 200671 Thomson Scientific, London, GB; AN 2006-685214 XP002695594, -& KR 2006 0029460 A (KOREA INST ENERGY RES) 6 April 2006 (2006-04-06)

## Description

### BACKGROUND OF THE INVENTION

The invention relates to burners for furnaces and furnace systems.

WO 2009/057839 A1 refers to an oxy-fuel burner according to the preamble of claim 1.

US 2007/0281264 A1 discloses a burner having a fuel delivery pipe inside an oxidant gas delivery pipe, whereby the fuel delivery pipe is offset from the longitudinal axis of the oxidant gas delivery pipe. This burner is constructed in such a way that both pipes may be rotated about their respective longitudinal axes for adjusting the flame footprint.

Further reference may be made to KR 10 2006 0029460 A and to US 6 206 686 B1.

Conical concentric oxy-fuel burners have been used in the crown of glass melting furnaces to melt batch in the furnaces. Once a pre-positioned hole is drilled in the furnace crown and a burner block is installed in the hole, there is limited if no ability to change the direction of the turbulent flame being emitted from the burner. If a different direction is required for the flame, it is required to drill and install an alternate (different) burner hole in order to re-position the burner and hence the flame. Existing furnace designs, with their steelwork and crown expansion joints, frequently limit the location that burners can be installed in the furnace and as a result optimum flame coverage is not always achieved or blocks are angled excessively so that the burner flame is less effective. Concentric oxy-fuel burners produce conical flames perpendicular to the melt which in turn produce circular flame patterns at the melt. The resulting flame pattern produced by a plurality of spaced apart burners limits the total flame coverage at the surface of the melt. Concentric burners combust uniformly in the combustion space above the melt. This uniformity and intensity of combustion can provide excessive combustion in the free space between the crown and the melt resulting in less than optimum heat transfer and higher oxides of nitrogen (NOₓ) at the melt surface. The aforementioned limitations and disadvantages occur also with horizontal burners and burners used in forehearths of furnaces.

### SUMMARY OF THE INVENTION

A burner such as an oxy-fuel burner is provided for a furnace or a forehearth, and which includes a gas delivery member, and a fuel delivery member having a portion disposed at an interior of the gas delivery member and offset from a longitudinal axis of the gas delivery member, the burner comprising the features of claim 1.

There is also provided a method not according to the invention for combusting product in a furnace or a forehearth, comprising providing a flow of gaseous oxidant along a first flow path to the furnace or the forehearth; providing a flow of gaseous fuel along a second flow path offset from the first flow path to the furnace or the forehearth; exposing the first flow path to the second flowpath; and combusting the gaseous oxidant and the gaseous fuel to provide a non-circular burn area.

There is also provided a burner according to claim 1, whereby one or more of the gas and fuel delivery members may be rotated along their respective longitudinal axes to control an angle of discharge of the burner flame and the resulting non-circular burn area.

There is further provided a flange assembly not according to the invention for orienting the gas delivery member and the fuel delivery member with respect to each other, and securing the members in a fixed position with respect to each other.

### BRIEF DESCRIPTION OF THE DRAWINGS

For a more complete understanding of the present invention, reference may be had to the following Figures, taken in conjunction with the detailed description, of which:
FIG. 1A discloses a partial cross-sectional plan view of a burner not according to the present invention for use with a furnace.
FIG. 1B discloses a cross-section of the burner taken along line 1B-1B of FIG. 1A.
FIG. 2A discloses a diagram of another embodiment of a burner not according to the present invention.
FIG. 2B discloses a cross-section diagram taken along line 2B-2B of FIG. 2A.
FIG. 3A discloses a diagram of another embodiment of a burner not according to the present invention.
FIG. 3B discloses a cross-section diagram taken along line 3B-3B of FIG. 3A.
FIG. 4 discloses a flame footprint provided by the burners of the present invention.
FIG. 5A discloses a diagram of another embodiment of a burner not according to the present invention.
FIG. 5B discloses a cross-section diagram taken along line 5B-5B of FIG. 5A.
FIG. 6A discloses a partial cross-sectional plan view of another embodiment of a burner not according to the present invention for use with a furnace.
FIG. 6B discloses a cross-section of the burner taken along line 6B-6B of FIG. 6A.
FIG. 7A discloses a partial cross-sectional plan view of still another embodiment of a burner not according to the present invention for use with a furnace.
FIG. 7B discloses a cross-section of the burner taken along line 7B-7B of FIG. 7A.
FIG. 8A discloses a partial cross-sectional plan view of another embodiment of a burner not according to the present invention for use with a furnace.
FIG. 8B discloses a cross-section of the burner taken along line 8B-8B of FIG. 8A.
FIG. 9 discloses a partial cross-sectional plan view of a burner not according to the present invention mounted in a burner block of a furnace.
FIG. 10 discloses a partial cross-sectional plan view of another burner embodiment for use with a furnace.
FIG. 11A discloses a view taken along line 11A-11A of FIG. 10.
FIGS. 11B and 11C show schematic views of elements of FIG. 11 A arranged in different positions.
FIGS. 12A-12C show schematic views corresponding to that of FIGS. 11A-11C, respectively.
FIGS. 13-15 show components of a flange assembly for the burner embodiments of FIGS. 10 and 16.
FIG. 16 shows a partial cross-sectional plan view of another burner embodiment for use with a furnace.

### DETAILED DESCRIPTION OF THE PREFERRED EMBODIMENTS

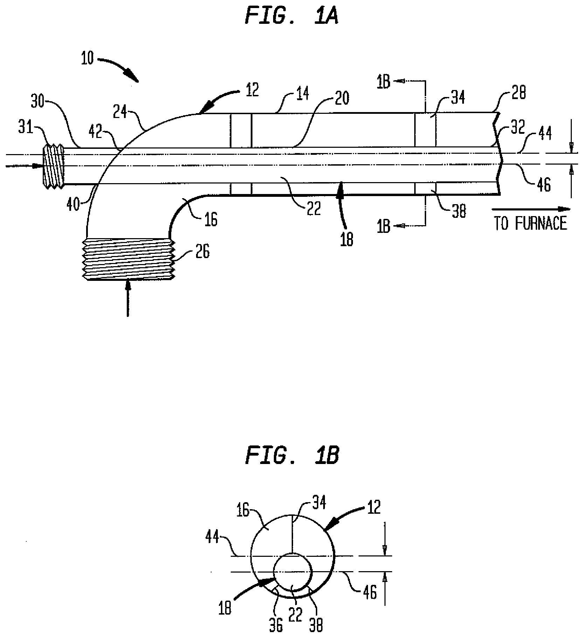

Referring to FIGS. 1A and 1B, there is shown a burner 10 not according to the present invention for use with a furnace, such as for example an oxy-fuel glass melting furnace or a forehearth of the furnace. Reference to use of the burner with a furnace also includes use of the burner with forehearth. The burner 10 consists of a gas pipe 12 or conduit, for delivering gaseous oxygen for example, having an exterior sidewall 14 constructed and arranged for disposition in a burner block of a furnace. The gas provided to and delivered in the gas pipe 12 is a gaseous oxidant such as for example gaseous oxygen at a purity level of 85% -100%; where less than 100% oxygen, the balance may be nitrogen and/or other noble gases, and combinations thereof. An internal space 16 of the gas pipe 12 is of sufficient size and shape to receive a fuel pipe 18 or conduit disposed therein. The fuel pipe 18 has an exterior side wall 20 and internal space 22.

The gas pipe 12, or oxidant pipe for example, is bent thereby providing an elbow 24 in the gas pipe 12. The pipe 12 is in fluid communication with a gas supply (not shown). A threaded exterior end 26 of the gas pipe 12 provides for releasable connection to the gas supply. An opposite or distal end 28 of the gas pipe 12 terminates in a burner block of the furnace (not shown) and is disposed at a select position above product melt in the furnace. Gaseous oxidant provided may be a single type of oxidant, such as for example oxygen, or selected from a composition of gases as well.

The interior 16 of the gas pipe 12 is sized and shaped to receive the fuel pipe 18 to be disposed therein, as shown in FIGS. 1A and 1b. The fuel pipe 18 is constructed of a material conducive to being exposed to the oxidant in the gas pipe 12. The fuel pipe 18 has an end or proximal end 30 extending from proximate the elbow 24 of the gas pipe 12, while an opposed or distal end 32 of the fuel pipe 18 terminates at approximately the same position as the end 28 of the gas pipe 12. The gas pipe 12 and fuel pipe 18 may terminate at the same location. The fuel pipe 18 is in fluid communication with a supply of gaseous fuel, such as for example natural gas, propane, liquid petroleum gas (LPG), synthetic gas (derived from organic solid, liquid and or gaseous sources, or combinations thereof), and combinations thereof. The fuel used may consist of a single gaseous fuel or a composition of fuels. The end 30 of the fuel pipe 18 projecting from the gas pipe 12 may also be threaded 31 for releasable connection to a source (not shown) of gaseous fuel.

Spacing or support members 34, 36, 38 are provided to support the fuel pipe 18 within the gas pipe 12 and provide the spaced relation therebetween without interrupting the flow of gas through the gas pipe 12. A weld or seal 40 is provided to seal the circumference of an inlet 42 in the gas pipe 12 through which the fuel pipe 18 is inserted.

Referring also to FIG. 1B, the disposition of the fuel pipe 18 at the interior 16 of the gas pipe 12 is more clearly shown. The gas pipe 12 and fuel pipe 18 are substantially parallel to each other from a point where the gas pipe 12 transits from the elbow 24 to a linear arrangement. It can be seen however that the disposition of the fuel pipe 18 within the gas pipe 12 is non-concentric; i.e., the gas pipe 12 and the fuel pipe 18 do not share a common longitudinal axis. Rather, a longitudinal axis 44 of the gas pipe 12 is offset with respect to a longitudinal axis 46 of the fuel pipe 18, as will be further discussed below, to provide a burner flame and flame footprint area for the particular furnace and product to be melted within the furnace. The burner can be adjusted to alter the flame footprint. This is accomplished because the gas pipe and fuel pipe are adapted, such as by construction and arrangement of their components, to be rotated about their respective longitudinal axes 44, 46.

The burner 10 of FIGS. 1A and 1B may also be constructed as an integral unit, thereby permitting rotation of the combined gas pipe and fuel pipe unit in the burner block to selectively control the disposition of the flame footprint area being emitted from the burner 10 into the furnace.

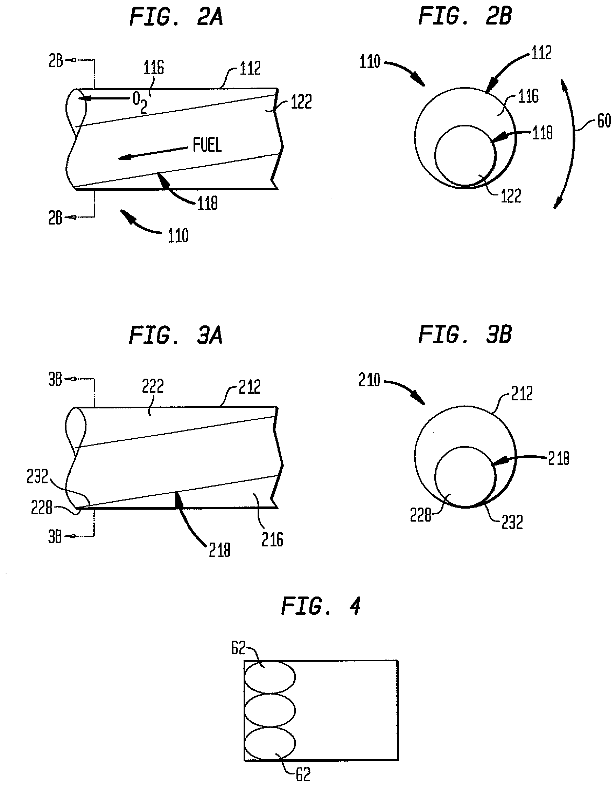

Other exemplary embodiments of a burner constructed not in accordance with the present invention are illustrated in FIGS. 2A, 2B; 3A, 3B; 6A, 5B; 7A, 7B; and 8A, 8B, respectively. Elements illustrated in those Figures which correspond to the elements described above with respect to FIGS. 1A, 1B have been designated by corresponding reference numerals increased by one hundred, two hundred, three hundred, four hundred, etc., respectively.

FIGS. 2A and 2B show schematics of another embodiment of the burner 110 of FIGS. 1A, 1B. In FIGS. 2A and 2B, the fuel pipe 118 is disposed in the gas pipe 112 in an angled relationship, i.e. not parallel, such that the flame emitted from the burner into the furnace also provides a non-circular footprint at the melt in the furnace. The burner 110 may have the gas pipe 112 and fuel pipe 118 formed as an integral unit, whereby rotation of the unit as represented by arrow 60 can occur to provide the flame footprint at select positions on the melt within the furnace. Rotation of the burner unit can be done through 360°. FIG. 2A shows the gaseous oxidant flow, for example, and gaseous fuel flow to the furnace.

The fuel pipe 218 may also be angled sufficiently in the gas pipe 212 such that a distal end 232 of the fuel pipe contacts a distal end 228 of the gas pipe 212. Such an arrangement is shown in FIGS. 3A and 3B.

In FIG. 4 there is represented a plurality of flame footprints 62 that are provided by the burner 10 (110, 210, etc.) embodiments in the Figures. Each non-circular footprint 62 or burn area represents the footprint from its respective burner.

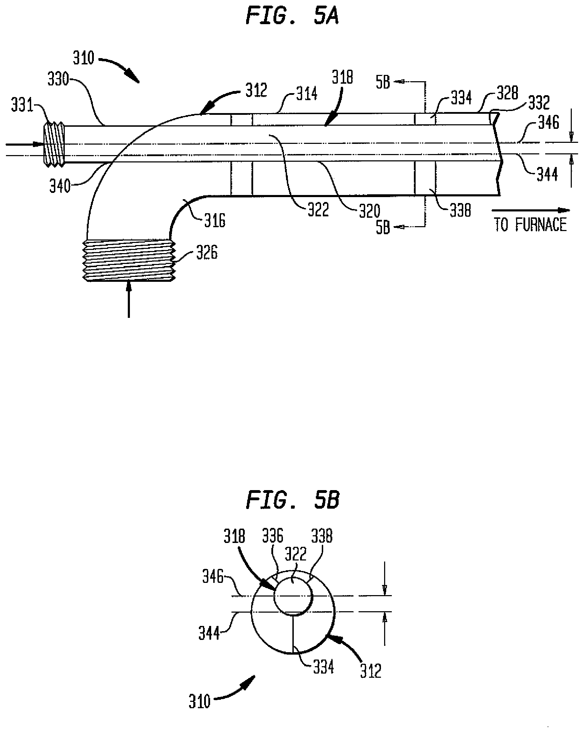

Referring to FIGS. 5A and 5B, the burner 310 is shown having the disposition of the fuel pipe 318 at the interior 316 of the gas pipe 312. The offset of the fuel pipe 318 with respect to the gas pipe 312 is shown in FIG. 5B.

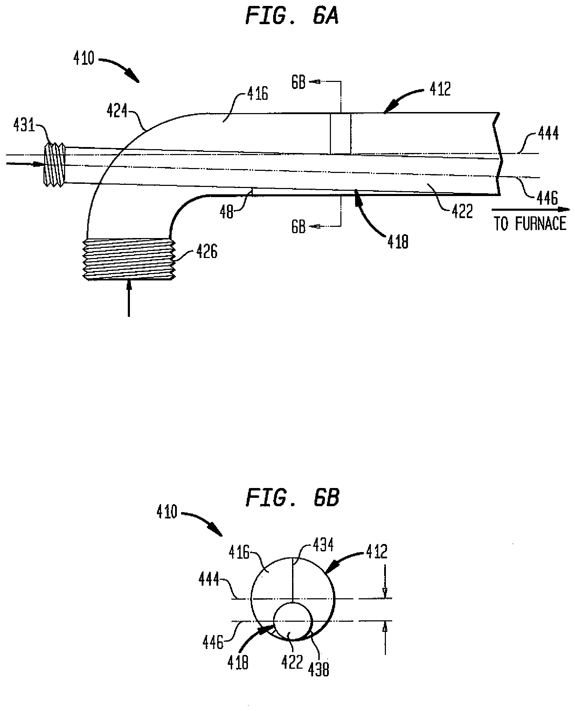

In FIGS. 6A and 6B, the burner 410 is similar to the burner 110 diagram shown in FIGS. 2A and 2B. In particular, the fuel pipe 418 is introduced into the gas pipe 412 at an angle 48 such that the straight or linear portion of the gas pipe 412 and fuel pipe 418 are not parallel and are non-concentric. The offset of the fuel pipe 418 with respect to the gas pipe 412 is shown in FIG. 6B.

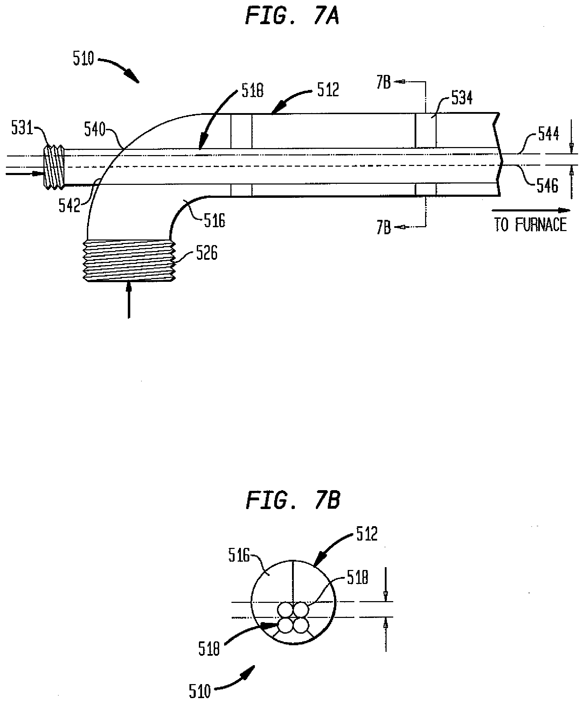

FIGS. 7A and 7B disclose a plurality of fuel pipes 518 disposed in a gas pipe 512. The plurality of fuel pipes 518 may be disposed as separate and discrete pipes or alternatively formed or arranged as a nested array or integral unit of fuel pipes, such as shown in FIG. 7B. The arrangement of the fuel pipes 518 in FIG. 7A are parallel with respect to each other and to the linear portion of the gas pipe 512 in which the fuel pipes 518 are disposed therein. As with other embodiments of the invention, the plurality of fuel pipes 518 and the gas pipe 512 can be formed as an integrated unit for being mounted in the burner block and subsequent rotation within the burner block to control the flame footprint area 562 at the melt in the furnace. The offset of the fuel pipes 518 with respect to the gas pipes 512 is shown in FIG. 7B. The array of fuel pipes 518 may share a common threaded portion 531 to releasably connect the fuel pipes 518 to a source of fuel.

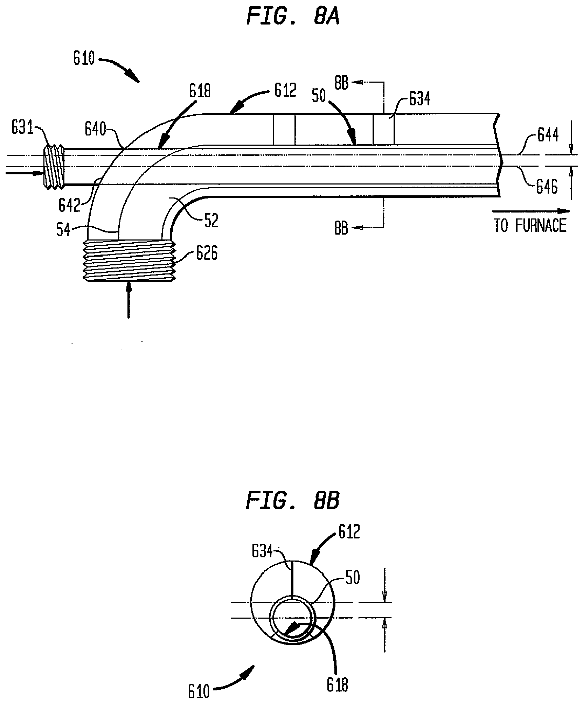

In FIGS. 8A and 8B, there is shown a fuel pipe 631 disposed in concentrically arranged gas pipes. That is, a primary outer gas pipe 612 has an interior sized and shaped to receive a secondary inner gas pipe 50 therein. The inner gas pipe 50 has an interior 52 sized and shaped to receive the fuel pipe 618 therein. The inner gas pipe 50 has an inlet 54 in registration with the inlet 642 of the outer gas pipe 612 so that the fuel pipe 618 can be inserted into the inner gas pipe 50. In FIGS. 8A, 8B, the inner gas pipe 50 and fuel pipe 618 have a common longitudinal axis 646 along a back portion of each and are therefore concentric. The orientation of the fuel pipe 618 and the gas pipes 612, 50 is also shown in FIG. 8B. As with other embodiments of the present invention, the burner 610 of FIG. 8A may be formed as an integral unit for being mounted in the burner block of the furnace. The offset of the fuel pipe 618 with respect to the gas pipes 612, 50 is shown in FIG. 8B.

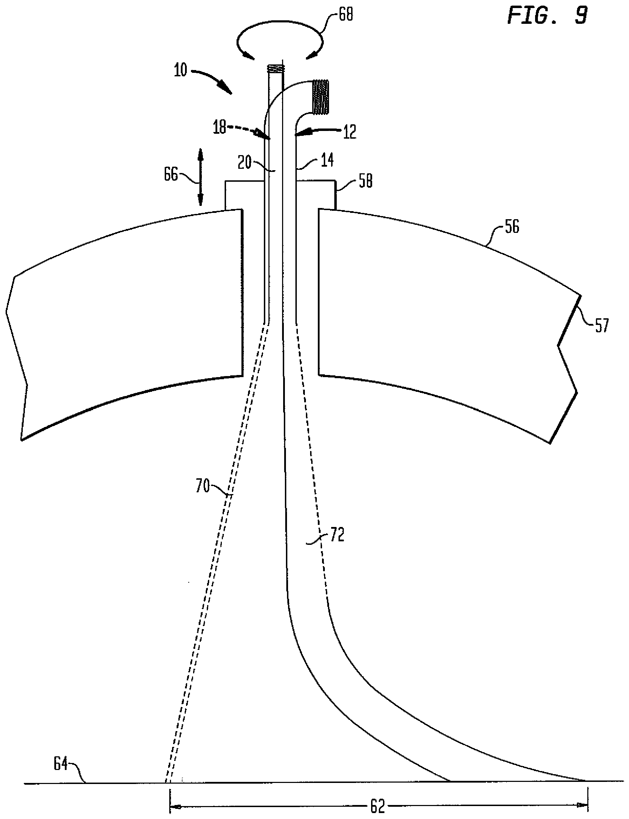

Referring to FIG. 9, there is shown a portion of a crown 56 of a furnace 57 in which a burner block 58 is mounted. The burner 10 of FIG. 1A is disposed within the burner block 58. It should be understood that other embodiments of the burner (110, 210, 310, 410, 510, 610) disclosed herein may be mounted in the burner block 58 as well. The burners 10, etc. are adapted to move in the direction of arrows 66, 68. With respect to the arrow 66, the burner 10 can be moved into a select position depending upon the amount of combustion that is desired to occur in the burner block 58. The distal ends of the fuel pipe 18 or pipes and gas pipe 12 or pipes terminate within the burner block 58 as shown, otherwise heat of the furnace atmosphere would melt the pipes if such were exposed from the burner block 58. Positioning the burner 10 in the burner block 58 effects combustion in the block 58, which in turn impacts the momentum and thrust of the flame provided by the burner 10. A higher momentum flame produces a smaller footprint 62 area, while a lower momentum flame produces a larger footprint 62 area. There is a lower oxidant concentration at area 70, as the gaseous fuel, for example, burns it uses up the oxidant and tends to seek area 72 where there is a higher concentration of oxidant to burn.

As shown in FIG. 9, a rich flame is provided from the burner at a distal end of the burner where the fuel pipe is closest to the sidewall of the gas pipe. An oxidized lean flame is provided from the distal end of the burner where the fuel pipe is further away from the side wall of gas pipe. The latter provides an increased or more expanded oxygen zone for combustion, thereby providing a relatively oblong shape, as opposed to a circular shape, in the burn area 62 or footprint of the flame impacting the melt of the furnace. See also FIG. 4

The non-circular footprints shown in FIG. 4 may also be provided by any one or combinations of the embodiments of the burners of the Figures.

The burners of the present invention may be used for glass melting, refining, and distribution. The discharge point of the fuel pipes are not concentric to the oxygen pipes, but staggered or off-set. This off-set and/or rotation of the burners enables the direction of the flame to be changed as well as the resulting flame footprint. The degree or amount of staggering or off-set will increase the amount of flame direction that can be achieved. The off-set can be further accentuated by angling the fuel conduit relative to the oxygen conduit. By way of example, the gas and fuel pipes have a circular cross-section, however the burner design may include gas and fuel pipes having different cross-sectional shapes, including but not limited to, elliptical, square, triangular, hex, etc. The fuel pipe can have a different cross-sectional shape than the gas pipe. Multiple or staged pipes can be utilized as well.

The arrows 66, 68 are with respect to all burner 10, etc. embodiments of the invention as such can be rotated in the block 58. Such rotation can occur by the individual components of the gas pipes and fuel pipes, or by the integral units formed of a gas pipe or pipes and fuel pipe or pipes.

In the combustion process, the fuel reacts with the oxidant. By off-setting the pipes 12, 18, there is created a fuel-rich flame at the point where the pipes are closest, and a fuel-lean area at the point where the pipes are furthest apart. The fuel-rich portion of the flame will react with the oxidant at the fuel-lean side. This staging will also provide the benefit of lower oxides of nitrogen (NOx) and increase heat transfer. The staging lowers the amount of pre-combustion in the burner block 58 and reduces the momentum of the flame emerging from the burner block. Whilst the flame is turbulent the lower momentum flame will reduce the velocity on the batch surface and reduce volatilization of batch components including but not limited to boron and lead.

The lower momentum of the flame with respect to a furnace increases the residence time of the carbon in fuel and increases luminosity and heat transfer by radiation through sooting. The primary benefit of this invention is that the off-set of the gas and fuel pipes 12, 18, respectively, and hence the gas and fuel flows, delays the mixing of the gaseous fuel and gaseous oxidant until the flame hits the raw batch surface 64. The excess oxygen from the lean portion of the flame continues in its primary direction away from the remaining fuel components. The resulting flame footprint 62 or burn area is non-circular as shown in FIGS. 4 and 9. The non-circular flame burn area enables more energy to be directed into the melting area.

The lower momentum of the flame with respect to a forehearth or distributor for a furnace provides for the flame not to impact a surface of the melt, but rather to "curl" or alter direction to become substantially parallel to a surface of the melt.

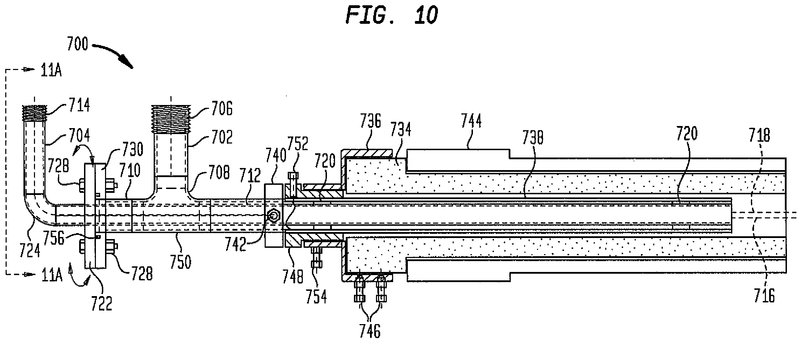

FIGS. 10-16 disclose other embodiments of the non-centric oxy-fuel burner for a furnace or a forehearth of a furnace.

Referring to FIG. 10, there is shown a burner generally at 700 for use in a furnace (not shown) or a forehearth (not shown) of the furnace. The burner 700 includes an oxidant delivery pipe 702 and a fuel delivery pipe 704 (also referred to as a fuel pipe 704). The oxidant delivery pipe 702 is constructed, in this embodiment, as having a "T-shape", wherein an end 706 of the oxidant pipe 702 shown in FIG. 10 is threaded for releasably connecting the pipe 702 to a remote source of oxidant (not shown). The oxidant used may be similar to that used with the embodiments of FIGS. 1-9. In this embodiment, the oxidant pipe 702 branches at 708 to provide a receptor portion 710 into which the fuel delivery pipe 704 is inserted along an interior 712 of the oxidant pipe 702. An end 714 of the fuel pipe 704 is also threaded for releasable connection to a remote fuel source (not shown). The fuel used may be similar to that used with the embodiments of FIGS. 1-9. A portion of the fuel pipe 704 is curved or angled upstream of a flange assembly (discussed below) and prior to insertion into and along the interior 712 of the oxidant pipe 702 as shown in FIG. 10.

A central longitudinal axis 716 of the oxidant pipe 702 and a central longitudinal axis 718 of the fuel pipe 704, while parallel, are offset with respect to each other. That is, as shown in FIG. 10 and by way of example, the fuel pipe 704 is disposed within the oxidant pipe 702 such that there respective longitudinal axis are offset, non-centric, from each other. Spacers 720 are connected, by welding for example, to an exterior surface of the fuel pipe 704 to extend at the interior 712 of the oxidant pipe 702 to provide support for and alignment of the fuel pipe 704 for being disposed offset within the oxidant delivery pipe. Accordingly, the longitudinal axis 716 of the oxidant pipe 702 extends through the center of each of the movable flange 722 and the fixed flange 730. The longitudinal axis 718 of the fuel pipe 704 is offset or non-centric with respect to the longitudinal axis 716, due to the spacers 720.

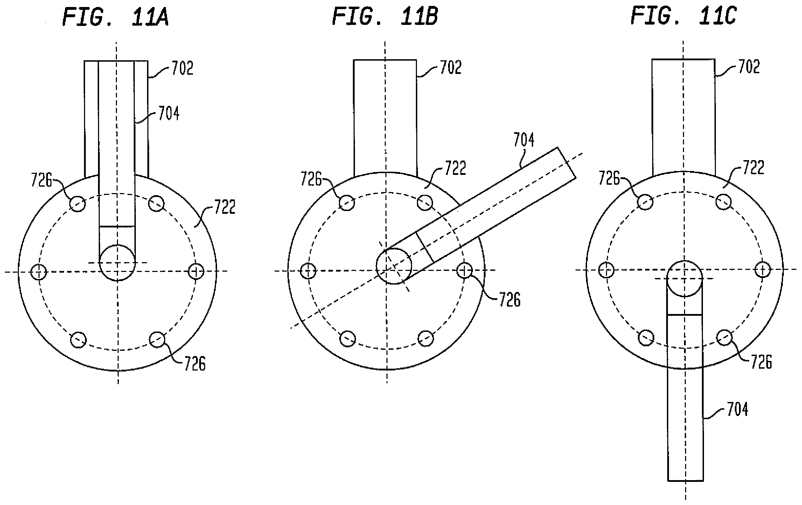

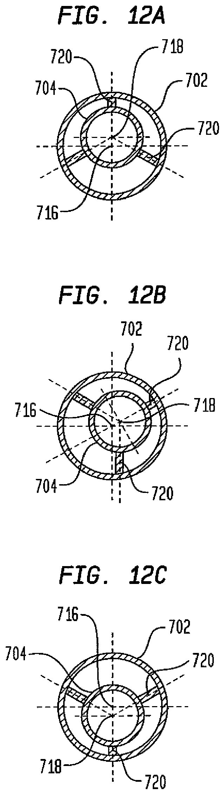

Referring also to FIGS. 11A-11C, a flange assembly is shown for use with the oxidant pipe 702 and the fuel pipe 704. Referring to the fuel pipe 704, the flange assembly includes a moveable fuel-side flange 722 attached to an exterior 724 of the fuel pipe. The flange 722 has a plurality of holes 726 therethrough and through which mechanical fasteners 728, such as for example nuts and bolts, may be disposed for releasably securing the flange 722 as will be discussed below. Rotation of the fuel pipe 704 about the longitudinal axis 716 of the oxidant pipe 702 causes the fuel side flange 722 to rotate concurrently with the rotation of the fuel pipe. Since the fuel pipe 704 is off-set or non-centric, i.e. not at a center of the fuel-side flange 722, when the fuel flange is released and rotated the flange 722 and fuel pipe 704 rotate around the longitudinal axis 716 of the oxidant pipe 702, which longitudinal axis 716 is at a center of both the fuel-side flange 722 and the oxidant-side flange 730. This is shown further with respect to FIGS. 11A-11C and 12A-12C.

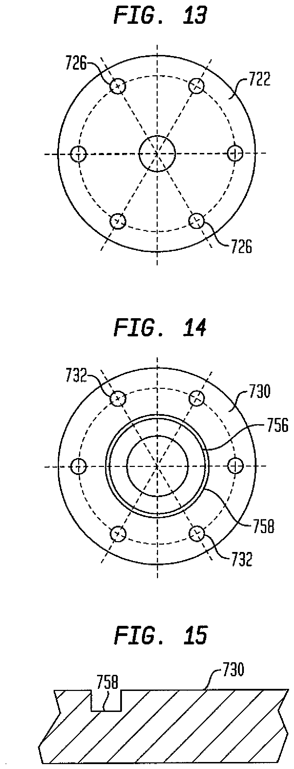

Referring as well to FIGS. 13-14, the oxidant pipe 702 is provided with a fixed oxidant-side flange 730, part of the flange assembly, mounted to the oxidant pipe. The fixed flange 730 has a plurality of holes 732 therethrough corresponding in number to that of the plurality of holes 726 of the fuel-side moveable flange 722. The holes 732 of the fixed flange 730 are also constructed and arranged to receive the mechanical fasteners 728 therein. The mechanical fasteners 728 function as a fastener assembly to releasably secure the flanges 722, 730 to each other.

A portion of the burner 700 is mounted to a burner block 734 as shown in FIG. 10. The burner block 734 includes a burner block housing 736, and has space 738 therein in which the oxidant pipe 702 can be disposed, as shown in FIG. 10. The housing 736 for the burner block 734 includes at least one mechanical fastener 746, such as a set screw, to secure the housing 736 to the burner block 734. A stop collar 740 with a mechanical fastener 742 such as a screw, is secured to the oxidant pipe 702, thereby preventing the oxidant pipe from slipping downwards out of position into the burner block 734.

The burner block 734 itself is mounted to a sleeve 744, which sleeve is disposed in the crown (not shown) of the furnace or forehearth of the furnace. A bushing 748 or adaptor collar is disposed about an exterior surface 750 of the oxidant pipe 702 between the burner block housing 736 and said surface 750. The bushing 748 is also provided with a mechanical fastener 752 to releasably secure the burner 700 into place with respect to the burner block housing 736. A mechanical fastener 754 is provided at the burner block housing 736 to releasably secure the burner block housing to the bushing 748.

While the sleeve 744 and burner block 734 are directly exposed to a combustion atmosphere of the furnace, the respective ends of the oxidant pipe 702 and the fuel pipe 704 are recessed within the burner block 734 so as not to be directly in contact with the furnace atmosphere.

The mechanical fasteners 728, 742, 752, 754 and 746 are releasably engagable in order to permit the burner 700 in its entirety to be rotated within the burner block 734 and the sleeve 744.

The fixed oxidant-side flange 730 is affixed, such as by welding, to the burner 700. The fuel pipe 704 can be rotated with respect to the oxidant pipe 702, while the oxidant pipe can be rotated with respect to the burner block 734, as will be discussed below.

Referring to FIGS. 11A-11C and 12A-12C, such show the orientation of the fuel pipe 704 with respect to the oxidant pipe 702 as provided for by both the movable fuel-side flange 722 and the fixed oxidant-side flange 730. The mechanical fasteners 728 can be released, thereby permitting the fuel pipe 704 to be rotated about the longitudinal axis 716 of the oxidant pipe 702 with the fuel-side flange 722 moving concurrent with the fuel pipe, and circumscribing the central longitudinal axis 716 of the oxidant pipe 702, as show in FIGS. 12A-12C. When the fuel pipe 704 has been rotated to a desired position, such as represented by, for example, that of FIGS. 11B or 11C, the respective holes 726, 732 at each of the flanges 722, 730 are moved into registration with each other and the mechanical fasteners 728 engaged or actuated to secure flange 722 of the fuel pipe 704 with respect to the flange 730 of the oxidant pipe 702. The range of rotation afforded the fuel pipe 704 and different positions said pipe can have with respect to the oxidant pipe 702 is only limited by the number of corresponding holes 726, 732 provided in the flanges 722, 730. That is, the greater number of holes provided in both the movable and fixed flanges 722, 730 which can be brought into registration with each other, the greater range of positions the fuel pipe 704 can have with respect to the oxidant pipe 702. The spacers 720 are connected to or may extend from the exterior surface 724 of the fuel pipe 704 and accordingly, FIGS. 12A-12C show the manner by which they retain the fuel pipe in the offset or non-centric position with respect to the oxidant pipe 702.

Referring also to FIGS. 13-15, a sealing arrangement between the moveable fuel-side flange 722 and the fixed oxidant-side flange 730 is shown which includes a seal 756, such as for example an O-ring, mounted at an indent 758 formed in the fixed oxidant-side flange 730 for coaction with a corresponding portion of the moveable fuel-side flange 722. The indent 758 "seats" the seal 756 in position for contacting the fuel-side flange 722. The seal 756 effectively seals off any leaks which could occur in view of the releasable engagement of the flanges 722, 730 with respect to each other.

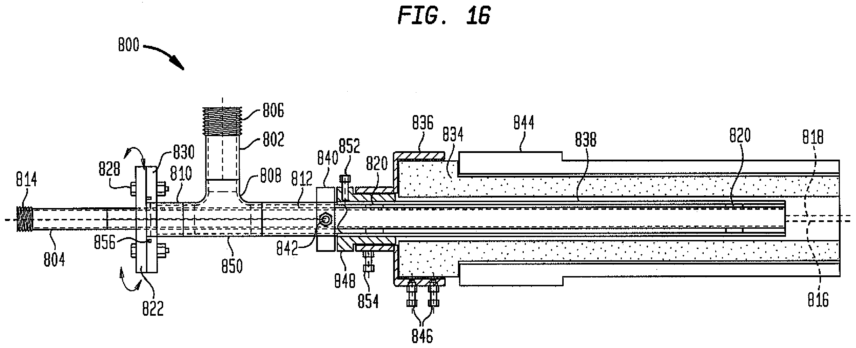

In FIG. 16, another embodiment of a burner is shown generally at 800. The only difference between the embodiment of FIG. 16 from that of FIG. 10 is that a fuel delivery pipe 804 has a straight shape upstream of the flange assembly, as opposed to the curved or angled portion of the embodiment shown in FIG. 10, prior to entry into the oxidant delivery pipe 802. All other features and functions are similar to that which was described with respect to the embodiment of FIG. 10.

Still another embodiment of a burner having features similar to that which are provided shown in FIGS. 10 and 16, would include the fuel delivery pipe 704, 804 being angled such as that shown with respect to the embodiment of FIGS. 2A-2B and in FIGS. 3A-3B. That is, the fuel delivery pipe 704, 804 would be neither parallel to nor concentric with the oxidant delivery pipe 802, 804. All other features and functions thereof would otherwise be similar to that which was discussed above with respect to the embodiments of FIGS. 10 and 16.

The gaseous fuel and gaseous oxidant used with the embodiments of FIGS. 10-16 is similar to that used with the embodiments of FIGS. 1-9.

For all of the embodiments discussed above with respect to FIGS. 1-16, the ends of the fuel and oxidant pipes can have other than threaded ends for connection to fuel and oxidant sources. For example, such ends may have connecting flanges, clamps or welds to connect the pipes to such fuel and oxidant sources.

## Claims

1. A burner (700) for use in a combustion chamber of a furnace or a forehearth, comprising
- a gas delivery member for delivering a gaseous oxidant,
- a fuel delivery member for delivering a fuel, and having a portion disposed at an interior of the gas delivery member and offset from a longitudinal axis of the gas delivery member, and
- a flange assembly mechanically associated with the gas and fuel delivery members, the flange assembly adapted for rotational movement and comprising
-- a first flange mounted to the gas delivery member, the first flange having a first plurality of holes (732) therethrough, and
-- a second flange fixed to the fuel delivery member for rotation therewith, the second flange having a second plurality of holes (726) therethrough,
-- the first plurality of holes (732) in the first flange and the second plurality of holes (726) in the second flange arranged for being in registration with each other upon rotational movement of the first and second flanges to a select position with respect to each other, and
-- a fastener assembly to releasably secure the first and second flanges to each other at the select position to releasably secure the gas and fuel delivery members with respect to each other to provide a flame footprint at a select location in the combustion chamber,
**characterized in that** the fuel delivery member is rotatable to circumscribe a path around a central longitudinal axis of the gas delivery member.

2. The burner of claim 1, further comprising a seal mounted to at least one of the first flange or the second flange for providing sealing engagement of the first and second flanges.

3. The burner of claim 1, further comprising a collar mounted to an exterior surface of the gas delivery member, the collar having a mechanical fastener associated therewith for releasably securing the collar to the exterior surface of the gas delivery member for preventing the gas delivery member from moving into the furnace or the forehearth.

4. The burner of claim 1, wherein the fastener assembly comprises mechanical fasteners for coacting with the first and second flanges.

## Patentansprüche

1. Brenner (700) zur Verwendung in einer Brennkammer eines Ofens oder eines Vorherds, umfassend:
- ein Gaszufuhrglied zur Zufuhr eines gasförmigen Oxidationsmittels,
- ein Brennstoffzufuhrglied zur Zufuhr eines Brennstoffs, das einen in einem Inneren des Gaszufuhrglieds angeordneten Teil, der von einer Längsachse des Gaszufuhrglieds versetzt ist, aufweist, und
- eine Flanschanordnung, die mit dem Gas- und Brennstoffzufuhrglied mechanisch verbunden ist, wobei die Flanschanordnung für eine Drehbewegung ausgeführt ist und Folgendes umfasst:
-- einen ersten Flansch, der an dem Gaszufuhrglied montiert ist, wobei der erste Flansch mehrere erste Löcher (732) dort hindurch aufweist, und
-- einen zweiten Flansch, der an dem Brennstoffzufuhrglied zur Drehung damit fixiert ist, wobei der zweite Flansch mehrere zweite Löcher (726) dort hindurch aufweist,
-- wobei die mehreren ersten Löcher (732) in dem ersten Flansch und die mehreren zweiten Löcher (726) in dem zweiten Flansch zur Deckung miteinander bei einer Drehbewegung des ersten und des zweiten Flansches in eine ausgewählte Position bezüglich einander angeordnet sind, und
-- eine Befestigungselementanordnung zum lösbaren Aneinanderanbringen des ersten und des zweiten Flansches in der ausgewählten Position zum lösbaren Aneinanderanbringen des Gas- und Brennstoffzufuhrglieds bezüglich einander zur Bereitstellung eines Flammenfußabdrucks an einer ausgewählten Stelle in der Brennkammer,
**dadurch gekennzeichnet, dass** das Brennstoffzufuhrglied zum Umschreiben einer Bahn um eine mittlere Längsachse des Gaszufuhrglieds drehbar ist.

2. Brenner nach Anspruch 1, ferner umfassend eine Dichtung, die an dem ersten Flansch und/oder dem zweiten Flansch zur Bereitstellung eines Dichtungseingriffs des ersten und des zweiten Flansches montiert ist.

3. Brenner nach Anspruch 1, ferner umfassend einen Bund, der an einer Außenfläche des Gaszufuhrglieds montiert ist, wobei der Bund ein mechanisches Befestigungselement aufweist, das zum lösbaren Anbringen des Bunds an der Außenfläche des Gaszufuhrglieds zum Verhindern, dass sich das Gaszufuhrglied in den Ofen oder den Vorherd bewegt, mit ihm verbunden ist.

4. Brenner nach Anspruch 1, wobei die Befestigungselementanordnung mechanische Befestigungselemente zum Zusammenwirken mit dem ersten und dem zweiten Flansch umfasst.

## Revendications

1. Brûleur (700) destiné à une utilisation dans une chambre de combustion d'un four ou d'un avant-corps, comprenant :
- un organe de distribution de gaz servant à distribuer un comburant gazeux,
- un organe de distribution de combustible servant à distribuer un combustible, et comportant une partie disposée à l'intérieur de l'organe de distribution de gaz et décalée vis-à-vis d'un axe longitudinal de l'organe de distribution de gaz, et
- un ensemble de brides associé mécaniquement aux organes de distribution de gaz et de combustible, l'ensemble de brides étant conçu à des fins de mouvement de rotation et comprenant
- une première bride installée sur l'organe de distribution de gaz, la première bride comportant une première pluralité de trous (732) la traversant, et
- une seconde bride fixée à l'organe de distribution de combustible à des fins de rotation avec celui-ci, la seconde bride comportant une seconde pluralité de trous (726) la traversant,
- la première pluralité de trous (732) dans la première bride et la seconde pluralité de trous (726) dans la seconde bride étant disposés de façon à se trouver en correspondance de position les uns vis-à-vis des autres à la suite d'un mouvement de rotation des première et seconde brides jusqu'à une position relative sélectionnée, et
- un ensemble d'éléments de fixation servant à assujettir de manière libérable les première et seconde brides l'une à l'autre dans la position sélectionnée afin d'assujettir de manière libérable les organes de distribution de gaz et de combustible l'un vis-à-vis de l'autre de façon à produire une aire de flamme au niveau d'un emplacement sélectionné dans la chambre de combustion,
**caractérisé en ce que** l'organe de distribution de combustible est rotatif de façon à décrire une trajectoire autour d'un axe longitudinal central de l'organe de distribution de gaz.

2. Brûleur selon la revendication 1, comprenant en outre un joint d'étanchéité installé sur la première bride et/ou la seconde bride afin d'assurer un accouplement étanche des première et seconde brides.

3. Brûleur selon la revendication 1, comprenant en outre une bague installée sur une surface extérieure de l'organe de distribution de gaz, la bague comportant un élément de fixation mécanique associé à celle-ci servant à assujettir de manière libérable la bague à la surface extérieure de l'organe de distribution de gaz afin d'empêcher l'organe de distribution de gaz de pénétrer dans le four ou l'avant-corps.

4. Brûleur selon la revendication 1, dans lequel l'ensemble d'éléments de fixation comprend des éléments de fixation mécaniques destinés à coopérer avec les première et seconde brides.
